# EUROPEAN PATENT SPECIFICATION

(11) **EP 1 709 125 B1**
(45) Date of publication and mention of the grant of the patent: **07.04.2010**
(21) Application number: 05702293.1
(22) Date of filing: 19.01.2005
(51) Int. Cl.: C09D 1/00

(54) **COATING COMPOSITION HAVING SURFACE DEPOLLUTING PROPERTIES**
BESCHICHTUNGSZUSAMMENSETZUNG MIT SELBSTREINIGENDEN EIGENSCHAFTEN
COMPOSITIONS DE REVETEMENT A PROPRIETES DE DEPOLLUTION DE SURFACES

(30) Priority: 30.01.2004 WO PCT/IB2004/000227
(43) Date of publication of application: 11.10.2006
(73) Proprietor: Millennium Chemicals UK Holdings Limited, Grimsby North East Lincolnshire DN40 2PR (GB)
(72) Inventor: GOODWIN, Graham, NE. Lincolnshire DN35 7PT (GB); STRATTON, John, Cleethorpes, NE. Lincolnshire DN35 ONE (GB); MCINTYRE, Robert, Highfields, Louth LN11 9XZ (GB)
(74) Representative: Leszczynski, André
(86) International application number: PCT/IB2005/000131
(87) International publication number: WO 2005/083014

(56) References cited:
- WO-A1-03/014022
- US-A- 6 037 289
- US-A1- 2003 082 367
- DATABASE WPI Section Ch, Week 200023 Derwent Publications Ltd., London, GB; Class A82, AN 2000-266975 XP002298180 & JP 2000 073297 A (NIPPON SEISHI KK) 7 March 2000 (2000-03-07)
- DATABASE WPI Section Ch, Week 200369 Derwent Publications Ltd., London, GB; Class C07, AN 2003-728124 XP002298181 & KR 2003 020 860 A (KEEPSOL CO LTD) 10 March 2003 (2003-03-10)

## Description

The present invention relates to a coating composition useful for formation of an inorganic layer of paint and/or soil cleaning, depolluting and/or antifouling coating on the surface of a substrate.

Conventional methods for making the surface of materials soil cleaning comprises treating the surface to confer the ability to remove stains or soils deposited on the surface. In other methods, excellent oxidative degradation activity of a photocatalyst fixed onto the surface is utilized to degrade organic matter or stains or soils deposited on the surface and also any gaseous pollution which comes into contact with said surface.

In particular, heterogeneous photocatalysis has efficiently been used for oxidizing and thereby removing unwanted compounds from fluids, including water, and air. Thus, UV-illuminated catalyst, such as titanium dioxide, absorbs UV light, which produces electrons and holes that migrate to the surface of the catalyst. At the surface, the electrons reduce adsorbed oxygen, while the holes oxidize organic compounds or adsorbed water molecules.

However, satisfactory depolluting properties may not be provided with only such a single photocatalytic coating composition for a long lifetime i.e. over 5 years.

Accordingly, it is an object of the present invention to provide a coating composition which, independently of environment, such as indoor or outdoor environment, can semi-permanently and in a single coating exhibits excellent surface depolluting properties, particularly excellent soil cleaning activity against greasy stains, including mildew, mold, algae or soils and, in addition, is resistant to abrasion.

According to a first aspect of the present invention, there is provided a coating composition for the formation of an inorganic layer on the surface of a substrate, said coating composition comprising at least
- an efficient amount of photocatalytic titanium dioxide particles,
- an opacifying agent, chosen from pigments, colorants and/or fillers
- particles of an inorganic binder,
- an organic binder, and
- a solvent,
wherein said photocatalytic titanium dioxide particles and organic binder are present in a weight ratio of photocatalytic titanium dioxide/organic binder ranging from 0.1 to 6 and wherein the inorganic binder comprises one or more amorphous substance selected from the group consisting of alkali silicates, alkali aluminates, alkali zirconates, alkali borates, alkali phosphates, alkali phosphonates and their mixture.

According to a specific embodiment, the said composition is a silicate emulsion paint.

According to a second aspect of the present invention, there is provided a process for providing a depolluting and/or soil cleaning coating on a substrate, comprising at least the steps of:
- applying a coating composition according to the invention onto a surface of the substrate to form a coating, and
- fixing the coating to obtain an inorganic layer on the surface of the substrate.

According to a third aspect of the present invention, there is provided a process for preventing and/or treating mildew, mold, algae and/or bacteria on a substrate comprising at least the steps of:
- applying a coating composition according to the invention onto a surface of the substrate to form a coating, and
- fixing the coating to obtain an inorganic layer on the surface of the substrate.

### Inorganic binder:

It includes at least an amorphous substance selected from the group consisting of alkali silicates, alkali aluminates, alkali zirconates, alkali borates, alkali phosphates alkali phosphonates and their mixtures.

Specific examples of preferred inorganic binder include alkali silicates represented by formula

M₂O.nSiO₂

wherein M represents an alkali metal, and n being 2.0-3.0.

According to the present invention, the inorganic binder includes at least one metal selected from the group consisting of rubidium, potassium, sodium, and lithium. Preferred alkali metal silicates include, for example, potassium silicate, sodium silicate, and/or lithium silicate.

Combined use of a plurality of the alkali metal silicates can improve the water resistance, alkali resistance and acid resistance of the inorganic layer. Alkali metal silicates commercially available in the form of an aqueous solution are also soluble.

The use of an alkali metal silicate can form an inorganic layer having good adhesion even at a low temperature of about 5 °C to the surface of the substrate.

According to a preferred embodiment of the present invention, the concentration of the inorganic binder and in particular the alkali metal silicate in the coating composition is preferably 0.5 to 35% by weight, in particular 1 to 30% by weight, more particularly 2 to 25% by weight on a solid basis. Such a concentration is advantageous for obtaining a surface having good soil cleaning and good strength.

The alkali silicate in the inorganic binder system can be cured in different ways. The desired curing may be brought about by atmospheric carbon dioxide.

Also, the coating may be hardened by elimination of water. Advantageously, the so-obtained coating forms an inorganic structure which has enough pores to confer a sufficiently high water vapour permeation.

### Organic binder:

The inventors have unexpectedly discovered that much a compound was particularly advantageous to obtain a photocatalytically active coating having a prolonged lifetime.

In the case of the instant invention the organic binder must not be decomposed during the forming of the expected coating. However, after prolonged exposure to UV light, the initial content in organic binder will slowly decrease until it is totally degraded.

More specifically, the organic binder may be chosen among copolymers of styrene/butadiene, and polymers and copolymers of esters of acrylic acid and in particular copolymers of polyvinylacrylic and styrene/acrylic esters.

In the present invention, styrene acrylic copolymer includes copolymers of styrene/acrylic esters thereof.

Such effect was in particular noticed where this compound is a styrene/acrylic copolymer and more particularly used in a weight ratio of photocatalytic TiO₂ particles/organic binder and in particular styrene/acrylic copolymer ranging from 0.3 to 4.5, in particular from 0.5 to 3.6, more particularly from 1 to 2.5.

In particular, a styrene acrylic emulsion such as ACRONAL 290D from BASF GmbH may be used.

### Photocatalytic particles:

In the present invention, the term "photocatalytic particles" as used herein refers to particles based on a material which, when exposed to light (excitation light) having higher energy (i.e., shorter wavelength) than the energy gap between the conduction band and the valence band of the crystal, can cause excitation (photoexcitation) of electrons in the valence band to produce a conduction band electron and leaving a hole in the valence band.

More particularly photocatalytic titanium dioxide particles are chosen from the group consisting of titanium oxide which may be of any type, for example anatase or rutile although anatase containing titanium oxide is especially preferred for its higher photoactivity.

For the titanium dioxide particles of the coating, the nature of the particle is, preferably, predominantly the anatase crystalline form. "Predominantly" means that the level of anatase in the titanium dioxide particles of the coating is greater than 50% by mass. The particles of the coating preferably exhibit a level of anatase of greater than 80%.

The degree of crystallization and the nature of the crystalline phase are measured by X-ray diffraction.

The crystalline titanium dioxide particles incorporated in the coating exhibit a mean size of between 5 and 80 nm, preferably of between 5 and 50 nm, more preferably still of between 10 and 40 nm. The diameters may be measured by transmission electron microscopy (TEM) and also XRD.

The preferred photocatalyst particles have a high surface area per gram, e.g., higher than 30 m²/g, preferably above 50 m²/g and most preferably greater than about 100 m²/g as measured by the BET method.

Particularly convenient for the invention, are photocatalytic titanium dioxide particles sold under the name PC 105 by Millennium Inorganic Chemicals Ltd.

The present invention may also involve a coated titanium dioxide pigment. This may include titanium dioxide particles, a first deposit of a phosphate compound contiguous with the base TiO₂ particles, optionally a deposit of a dense silica compound contiguous with the phosphate deposit, optionally a second deposit of a phosphate compound contiguous with the dense silica compound, and optionally a deposit of an alumina compound contiguous with the second phosphate deposit.

In alternate embodiment, the titanium dioxide particles can be coated with a zirconia compound instead of the silica compound.

Preferably, the phosphate compound is formed from a water soluble phosphate compound, such as for example, tetrapotassium pyrophosphate, sodium polyphosphate, tetrasodium pyrophosphate (Tetron^{™}), sodium tripolyphosphate, potassium tripolyphosphate, sodium hexametaphosphate (Calgon^{™}), phosphoric acid, and the like. Most preferably, the water soluble phosphate compound is sodium hexametaphosphate. The weight percent of the phosphate compound can vary depending on the layer deposited on the titanium dioxide base. It is not necessary that the phosphate compound coats each titanium dioxide particle, but only that some phosphate be deposited on the particle. Preferably, the phosphate compound in the first layer is deposited in an amount of from about 0.05% to about 1.0%, more preferably from about 0.05% to about 0.75% and most preferably, from about 0.05% to about 0.5% based upon the weight of titanium dioxide base.

The weight percent silica content can vary depending on the layer deposited on the first phosphate layer. Silica compounds suitable for use in the present invention include water soluble alkali metal silicates. Preferred alkali metal silicates include sodium silicate, potassium silicate and the like. Most preferably, the silica compound is sodium silicate. Preferably, the silica compound is deposited in an amount of from about 0.5% to about 5.0% by weight of silica based on the total weight of the titanium dioxide base.

Zirconia compounds suitable for use in the present invention include the acidic salts of zirconia such as zirconium oxychloride, zirconyl sulphate and the like. Most preferably, the zirconia compound is zirconium oxychloride or zirconyl sulphate. Preferably, the zirconia compound is deposited in an amount of from about 0.1 % to about 5.0% by weight of zirconia based on the total weight of the titanium dioxide base.

The particles having a photocatalytic activity are present in an amount of 0.5 to 20%, preferably 1 to 15%, and most preferably 3 to 12% by weight of total weight of the composition.

In one embodiment of the invention, the combination of small (1-8 nm) photocatalytic particles with larger non-photocatalytic particles (approximately 250-350 nm), and more particularly non photocatalytic TiO₂ particles make a useful self-cleaning paint composition.

The photocatalytic titanium oxide particles may be introduced in the composition as a sol prepared by dispersion in a dispersant, as a water- or solvent-containing paste, or as a powder. Preferred examples of the dispersant used to prepare a sol include water, alcohols such as methanol, ethanol, isopropanol, n-butanol and isobutanol, and ketones such as methyl ethyl ketone and methyl isobutyl ketone.

The composition according to the present invention includes at least a solvent.

Examples of solvents usable herein include water, an organic solvent, and a mixed solvent composed of water and an organic solvent. Water, an alcohol, or a mixed solvent composed of water and an alcohol is particularly preferred.

Addition of water as the solvent is often preferred.

### Opacifying agents

According to the invention, the opacifying agent includes any organic or inorganic compound able to provide hiding power to the coating. It includes pigments, colorants and/or fillers as listed hereafter. More preferably, it includes at least one inorganic compound like titanium dioxide.

Such titanium dioxide pigments which are not photoactive are disclosed in US 6 342 099 (Millennium Inorganic Chemicals Inc.).

In particular, the titanium dioxide pigment may be the particles of Tiona 595 sold by Millennium Inorganic Chemicals Ltd.

If necessary, various other compounds may be added to the composition of the invention, provided such an addition does not compromise the shelf life, UV durability or non-staining properties of the resulting coating.

Examples of such additional compounds include filler(s) like quartz, calcite, clay, talc, barite and/or Na-Al-silicate; pigments like TiO₂, lithopone and other inorganic pigments; dispersants like polyphosphates, polyacrylates, phosphonates, naphthene and lignin sulfonates; wetting agents like anionic, cationic, amphoteric and non-ionic surfactants; defoamers like silicon emulsions, hydrocarbons, long-chain alcohols, ...; stabilizers like mostly cationic compounds; coalescing agents like alkali-stable esters, glycols, hydrocarbons; rheological additives like cellulose derivatives (carboxymethylcellulose CMC, hydroxyethylcellulose HEC), xanthane gum, polyurethane, polyacrylate, modified starch, bentone and other lamellar silicates; water repellents like alkyl siliconates, siloxanes, wax emulsion, fatty acid Li salts and conventional fungicide or biocide.

Of course, none of the additives should be saponifiable or otherwise unstable to the alkalinity of the finished coating (pH values about 11.5).

The present invention also provides a process for the production of a photocatalytically active coated substrate which comprises depositing a composition coating on a material by contacting a surface of the material with said composition.

The composition of the present invention may be applied onto the surface of the material by any suitable method, and examples of suitable methods include spray coating, dip coating, flow coating, spin coating, roll coating, brush coating, and sponge coating.

The composition after the application onto the surface of the substrate is then fixed, generally by drying or curing to form an inorganic layer, generally under the form of a thin film. The term "drying or curing" used herein means that the binders contained in the composition, according to the present invention, are converted to a film. Therefore, drying may be performed by air drying.

Advantageously, the forming of the coating does not require thermally treatment at high temperatures like of 50-450°C for several hours.

The composition according to the present invention may be applied on the surface of a high variety of materials.

The material is not particularly limited, and examples thereof include metals, ceramics, glasses, woods, stones, cements, concretes, and combinations of the above materials and laminates of the above materials. Specific examples to which the composition may be applied include housings, building materials; exterior of the buildings; interior of the buildings; sashes; glass; structural materials; exterior of machines and articles; dustproof covers and coatings; and films, sheets and seals.

In preparing the preferred embodiments of the present invention, various alternatives may be used to facilitate the objectives of the invention.

The following examples are presented to aid in an understanding of the present invention and are not intended to, and should not be construed to limit the invention in any way. All alternatives, modifications and equivalents which may become obvious to those of ordinary skill in the art upon a reading of the present disclosure are included within the spirit and scope of the invention.

The present invention will be described in more detail with reference to the following examples, though it is not limited to these examples only.

### Example 1:

Three coating compositions according to the invention are prepared with the following components:
- photocatalytic titanium dioxide: PC 105 (30% TiO₂ by weight in water containing 1% of sodium hexametaphosphate) from Millennium Inorganic Chemicals,
- titanium dioxide pigments: Tiona595 from Millennium Inorganic Chemicals,
- calcium carbonate (filler): Omyacarb 5GU and Setacarb 850 OG from Omya UK,
- styrene acrylic copolymer latex (organic binder): Acronal 290D (50% by weight in dry water) from BASF,
- potassium silicate soln. (inorganic binder) Mol ratio>3.2: Betolin P35 from Woellner Silikat GmbH,
- tetrapotassium ethylenediamine tetracetic acid: Betolin A11 from Woellner Silikat GmbH,
- unsaturated fatty acid esters (antifoaming agent): Foamex K3 from Tego,
- hydroxyethylcellulose (thickening agent): Natrosol 250 MR from Hercules,
- heteropolysaccharid (thickening agent): Betolin V30 from Woellner Silikat GmbH,
- alkaline salt of special phosphonic acid: Sapetin D20 from Woellner Silikat GmbH, and
- quaternary alkyl ammonium compound: Quart 25 from Woellner Silikat GmbH.

These compounds were used with the following amounts.

| Part A | |
|---|---|
| | % by weight |
| Water | 18.4 |
| Dispersant | 0.2 |
| Heteropolysaccharid | 0.1 |
| Hydroxyethyl cellulose | 0.4 |
| Viscosity stabilizer | 0.4 |
| Antifoaming agent | 0.2 |
| Titanium dioxide pigments | 7.9 |
| Calcium carbonate | 28.1 |
| | |

| Part B | |
|---|---|
| Photocatalytic titanium dioxide | ... |
| Water | as required |
| Styrene acrylic (50%) | 6.4 |
| Antifoaming agent | 0.1 |
| Texanol | 0.3 |
| Inorganic binder | 15.9 |
| Tetrapotassium ethylenediamine | |
| tetracetic acid | 0.9 |

The paints are prepared in two parts.

For part A, the following are successively added to water, the alkaline salt of special phosphonic acid, thickening agents, the viscosity stabilizer and the antifoaming agent, the resulting mixture being mixed for 2 minutes are then added with T595 (TiO₂), followed by the calcium carbonate.

The components are mixed under high shear for 20 minutes.

The water is added to the photocatalytic titanium dioxide followed by the addition of the styrene acrylic copolymer latex, the antifoaming agent, the Texanol, the inorganic binder and tetrapotassium ethylenediamine tetracetic acid. The components are mixed for 5 minutes to form part B.

Part A is then mixed with part B under high shear mixing.

The so-obtained paints were tested for their efficiency. The tested paint was applied at a coverage of 770 g/m² on the surface of a substrate and the coated substrate submitted to the following tests.

### I - Determining of NO/NO₂ removal by coatings

The NOₓ that is used is NO at 450 ppm. After the initial measurement, the paint films were irradiated with 55 W/m² UV in the range of 300 to 400 nm range for 18 hours using a filtered Xenon light source. For the NOₓ measurements, the samples are irradiated with a UV fluorescent tube which emits 10 W/m² UV in the range of 300 to 400 nm.

### 1. Equipment

Nitrogen Oxides Analyser Model ML9841 B
- ex Monitor Europe
   UV Lamp Model VL-6LM 365 & 312 nanometer wavelength
- ex BDH
   Air-tight sample chamber
   3 channel gas mixer
- ex Brooks Instruments, Holland

### 2. Gases

| | |
|---|---|
| NO | Nitric Oxide |
| NO₂ | Nitrogen Dioxide |
| NOₓ | Mixture NO & NO₂ |

Compressed air containing water vapour.

### 3. Method

The NOₓ results were obtained by first washing the paint films for two hours to remove the soluble potassium carbonate that is formed between the excess potassium hydroxide in the potassium silicate and carbon dioxide from the atmosphere.

The method of measure is as follows:
1. Switch on Analyser and exhaust pump. Ensure exhaust pipe goes to atmosphere.
2. Allow to warm-up. Several internal components need to reach operating temperature before the analyser will begin operation. The process will, typically, take 60 mins from cold start and the message START-UP SEQUENCE ACTIVE will be displayed until operating conditions are met.
3. After warm-up turn on air and test gas supply to the gas mixer.
4. Calibrate the Analyser on the Test gas supply only, (turn the air channel to zero on the gas mixer), according to the manufacturer's instructions
5. After calibration turn OFF the test gas supply at the gas mixer.
6. Place test sample in the test chamber and seal chamber.
7. Turn on both air and test gas and adjust each until required level of test gas is reached, shown by the Analyser output. RECORD level.
8. Switch on the UV lamp when test gas levels are at desired point.
9. Allow the irradiated sample value to reach equilibrium, typically up to 5 mins.
10. RECORD the value shown on the analyser.
11. Report "Initial Value" i.e. no UV, "Final Value" after UV exposure for set period, ΔValue i.e. Initial- Final and %reduction i.e. Δ value / initial value x 100.

The results are submitted in the following table.

### II - Method for determination of coating photoactivity towards methylene blue

Irradiating Titanium dioxide with Ultra Violet light results in the production of holes and electrons which are then capable of forming reactive species such peroxide, hydroperoxide and hydroxyl ions. These are then capable of oxidising organic molecules such as methylene blue to water, carbon dioxide and nitrogen containing species with the associated loss of colour. The level of photoactivity is monitored by measuring the L* (brightness) and b* value (blue/yellowness).

The method is most suitable for coatings that are wetted with water such as latex or emulsion paints. The porosity of the coatings will affect the amount of stain that the films will pick up but this is minimised by the addition of a thickener to the methylene blue solution. There may also be colour changes of the blue due to pH effects.

### Preparation of Methylene Blue solution

The methylene blue is first dissolved in de-mineralised water to a concentration of 0.05% by weight. Using slow speed stirring the equivalent of 1% Natrasol MR^{®} (Hydroxy Ethyl Cellulose) is then added. In order for the Natrosol to hydrate the pH is raised to approximately 8.0 with dilute ammonia. This requires only a few drops. The solution is stirred for a further hour to completely hydrate the Natrosol.

### Paint Film Staining

The paint film to be tested is over-coated with a film of the methylene blue solution by drawing down a film using a spiral wound rod. The test film has previously been prepared by applying a wet paint film to 30micron thick Melinex or Mylar sheet. The spiral wound rods are specified to give various film thicknesses but those giving 25 to 50 microns wet film are generally employed. The coatings are left to dry at 23 deg C. 50% RH overnight.

### Measurement.

A suitable sized area of the coatings is cut from the film and the L* and b* measurements are made using a Spectrophotometer. The paint films are then exposed to light from an Atlas Suntest machine set to give a light output of 550W/M² from 250 to 765nm. The paint films are re-measured at 18 hours. The difference in L* and b* between the unexposed and exposed results is a measure of the photoactivity of the coating towards self-cleaning.

The data are provided in the following table.

### III Method for Determination of durability

The durability of the coatings were assessed by preparing coatings on stainless steel panels and exposing them to simulated weathering conditions in a machine designed for that application. The amount of weight which the coating losses during the exposure was a measure of its durability.

The stainless steel panels measure 75 by 150mm and were 0.75mm thick. The panels were weighed to 0.0001 g before and after application of the paint film so that the weight of the coating can be calculated.

The panels can be coated by any convenient means including brushing, spraying, spinning or by spiral rod applicator. Only the surface to be exposed was coated. The dry film thickness was typically in the range of 20 to 50 microns.

The coatings were left to dry for 7 days before exposure in the Weatherometer.

The Weatherometer used for the exposures was a Ci65A made by Atlas Electric Devices, Chicago. The light source was a 6.5kW Xenon source emitting 0.5W/m² UV at 340nm. The black panel temperature was 63 degrees Celsius. Water spray was applied for 18 minutes out of every 120 minutes and there was no dark cycle.

The so-obtained values are submitted in the following table. They show that only about 60% by weight of the initial total weight of the painting according to the invention in efficiently have been lost after 760 hours exposure.

**Table**

| Formulation | % NO removal | Washed film Stain test | | Durability % weight lost after 760 hours exposure |
|---|---|---|---|---|
| | | ΔL* | Δb* | |
| Comparative (0% Photocatalyst) | 0 | 1.2 | 0.8 | --- |
| F₁ (5% w/w Photocatalyst)* | 6.3 | 1.4 | 1.2 | 65 |
| F₂ (10% w/w Photocatalyst)* | 8.9 | 2.0 | 1.8 | 68 |

| | | | | |
|---|---|---|---|---|
| *The quantity is expressed in quantity of commercial product i.e. solvent and dry matter. | | | | |

### IV- Mildew resistance

The tested paint was applied at a coverage of 300 g/m² on the surface of a substrate based on aluminium and exposed for three months according to the international method ASTM D3274-95.

The resistance was compared to a blank painting i.e. free of photocatalyst. The so obtained results show that the substrate treated according to the invention exhibits a resistance at least twice as large as the substrate treated by the comparative painting.

## Claims

1. A coating composition for the formation of an inorganic layer on the surface of the substrate, comprising
- an efficient amount of photocatalytic titanium dioxide particles,
- an opacifying agent, chosen from pigments, colorants and/or fillers, provided that when said pigments are titanium dioxide pigments, they are not photoactive,
- particles of an inorganic binder,
- an organic binder,
- a solvent,
wherein said organic binder and photocatalytic titanium dioxide particles are present in a weight ratio ranging from 0.1 to 6 photocatalytic titanium dioxide/organic binder; and wherein the inorganic binder comprises one or more amorphous substance selected from the group consisting of alkali silicates, alkali aluminates, alkali zirconates, alkali borates, alkali phosphates, alkali phosphonates and their mixtures.

2. The coating composition according to claim 1, wherein the organic binder is selected in the group of copolymers styrene/butadiene and polymers and copolymers of acrylic esters.

3. The coating composition according to claim 1 or 2, wherein the organic binder is selected from the group consisting of polyvinylacrylic and copolymers of styrene/(meth)acrylic esters.

4. The coating composition according to any one of claims 1 to 3, wherein the organic binder is present in a weight ratio of photocatalytic TiO₂ particles/organic binder ranging from 0.3 to 4.5.

5. The coating composition according to any one of claims 1 to 3, wherein the organic binder is present in a weight ratio of photocatalytic TiO₂ particles/organic binder ranging from 0.5 to 3.6.

6. The coating composition according to any one of claims 1 to 5, wherein the photocatalytic titanium dioxide particles are anatase, rutile or mixtures thereof.

7. The coating composition according to any one of claims 1 to 67, wherein the photocatalytic titanium dioxide particles comprise crystalline anatase-type titanium dioxide.

8. The coating composition according to claim 7, wherein the crystalline titanium dioxide particles exhibit a mean size between 5 and 80 nm.

9. The coating composition according to claim 7, wherein the crystalline titanium dioxide particles exhibit a mean size between 5 and 50 nm.

10. The coating composition according to claim 7, wherein the crystalline titanium dioxide particles exhibit a mean size between 10 and 40 nm.

11. The coating composition according to any one of claims 1 to 10, wherein the photocatalytic titanium dioxide particles are present in an amount ranging from 0.5 to 20% by weight of the total composition.

12. The coating composition according to any one of claims 1 to 10, wherein the photocatalytic titanium dioxide particles are present in an amount ranging from 1 to 15% by weight of the total composition.

13. The coating composition according to any one of claims 1 to 10, wherein the photocatalytic titanium dioxide particles are present in an amount ranging from 3 to 12% by weight of the total composition.

14. The coating composition according to any one of claims 1 to 13, wherein the inorganic binder comprises at least one alkali metal silicate.

15. The coating composition according to claim 14, wherein the alkali metal silicate is potassium silicate, sodium silicate or lithium silicate.

16. The coating composition according to claim 14 or 15, wherein the concentration of the alkali metal silicate is 0.5% to 35% by weight on a solid basis

17. The coating composition according to claim 14 or 15, wherein the concentration of the alkali metal silicate is 1% to 30% by weight on a solid basis.

18. The coating composition according to claim 14 or 15, wherein the concentration of the alkali metal silicate is 2% to 25% by weight on a solid basis.

19. The coating composition according to any one of claims 1 to 18, wherein the solvent comprises water.

20. The coating composition according to any one of claims 1 to 19, wherein the coating is a silicate emulsion paint.

21. A process for providing a depolluting and/or soil cleaning coating on a substrate, comprising the steps of:
a) applying a coating composition according to any one of claims 1 to 20 onto a surface of substrate to form a coating, and
b) fixing the coating to obtain an inorganic layer on the surface of the substrate.

22. A process for preventing and/or treating mildew, mold, algae, and/or bacteria on a substrate comprising the steps of:
a) applying a coating composition according to any one of claims 1 to 20 onto a surface of substrate to form a coating, and
b) fixing the coating to obtain an inorganic layer on the surface of the substrate.

## Patentansprüche

1. Beschichtungszusammensetzung zur Bildung einer anorganischen Schicht auf der Oberfläche des Substrats, umfassend:
- eine wirksame Menge von fotokatalytischen Titandioxid-Teilchen,
- ein Mittel für Opazität, ausgewählt aus Pigmenten, farbgebenden Mitteln und/oder Füllstoffen, mit der Maßgabe dass, wenn die Pigmente Titandioxid-Pigmente sind, sie nicht fotoaktiv sind,
- Teilchen eines anorganischen Bindemittels,
- ein organisches Bindemittel,
- ein Lösungsmittel,
wobei das organische Bindemittel und die fotakatalytischen Titandioxid-Teilchen in einem Gewichtsverhältnis im Bereich von 0,1 bis 6 an fotokatalytischen Titandioxid/organischem Bindemittel vorhanden sind; und wobei das anorganische Bindemittel eine oder mehr amorphe Substanzen, ausgewählt aus der Gruppe, welche aus Alkalisilikaten, Alkalialuminaten, Alkalizirkonaten, Alkaliboraten, Alkaliphosphaten, Alkaliphosphonaten und ihren Gemischen besteht, umfasst.

2. Beschichtungszusammensetzung gemäß Anspruch 1, wobei das organische Bindemittel aus der Gruppe von Copolymeren von Styrol/Butadien und Polymeren und Copolymeren von Acrylestern ausgewählt ist.

3. Beschichtungszusammensetzung gemäß Anspruch 1 oder 2, wobei das organische Bindemittel aus der Gruppe ausgewählt ist, welche aus Polyvinylacryl- und Copolymeren von Styrol/(Meth)acrylestem besteht.

4. Beschichtungszusammensetzung gemäß einem der Ansprüche 1 bis 3, wobei das organische Bindemittel in einem Gewichtsverhältnis an fotokatalytischen TiO₂-Teilchen/organischem Bindemittel im Bereich von 0,3 bis 4,5 vorhanden ist,

5. Beschichtungszusammensetzung gemäß einem der Ansprüche 1 bis 3, wobei das organische Bindemittel in einem Gewichtsverhältnis an fotokatalytischen TiO₂-Teilchen/organischem Bindemittel im Bereich von 0,5 bis 3,6 vorhanden ist,

6. Beschichtungszusammensetzung gemäß einem der Ansprüche 1 bis 5, wobei die fotokatalytischen Titandioxid-Teilchen Anatas, Rutil oder Gemische davon sind.

7. Beschichtungszusammensetzung gemäß einem der Ansprüche 1 bis 6, wobei die fotokatalytischen Titandioxid-Teilchen kristallines Titandioxid vom Ananas-typ umfassen.

8. Beschichtungszusammensetzung gemäß Anspruch 7, wobei die kristallinen Titandioxid-Teilchen eine mittlere Größe zwischen 5 und 80 nm aufweisen.

9. Beschichtungszusammensetzung gemäß Anspruch 7, wobei die kristallinen Titandioxid-Teilchen eine mittlere Größe zwischen 5 und 50 nm aufweisen.

10. Beschichtungszusammensetzung gemäß Anspruch 7, wobei die kristallinen Titandioxid-Teilchen eine mittlere Größe zwischen 10 und 40 nm aufweisen.

11. Beschichtungszusammensetzung gemäß einem der Ansprüche 1 bis 10, wobei die fotokatalytischen Titandioxid-Teilchen in einer Menge im Bereich von 0,5 bis 20 Gew.-% der Gesamtzusammensetzung vorhanden sind.

12. Beschichtungszusammensetzung gemäß einem der Ansprüche 1 bis 10, wobei die fotokatalytischen Titandioxid-Teilchen in einer Menge im Bereich von 1 bis 15 Gew.-% der Gesamtzusammensetzung vorhanden sind.

13. Beschichtungszusammensetzung gemäß einem der Ansprüche 1 bis 10, wobei die fotokatalytischen Titandioxid-Teilchen in einer Menge im Bereich von 3 bis 12 Gew.-% der Gesamtzusammensetzung vorhanden sind.

14. Beschichtungszusammensetzung gemäß einem der Ansprüche 1 bis 13, wobei das anorganische Bindemittel mindestens ein Alkalimetallsilikat umfasst.

15. Beschichtungszusammensetzung gemäß Anspruch 14, wobei das Alkalimetallsilikat Kaliumsilikat, Natriumsilikat oder Lithiumsilikat ist.

16. Beschichtungszusammensetzung gemäß Anspruch 14 oder 15, wobei die Konzentration des Alkalimetallsilikats auf Feststoffbasis 0,5 Gew.-% bis 35 Gew.-% beträgt.

17. Beschichtungszusammensetzung gemäß Anspruch 14 oder 15, wobei die Konzentration des Alkalimetallsilikats auf Feststoffbasis 1 Gew.-% bis 30 Ges.-% beträgt.

18. Beschichtungszusammensetzung gemäß Anspruch 14 oder 15, wobei die Konzentration des Alkalimetallsilikats auf Feststoffbasis 2 Ges.-% bis 25 Gew.-% beträgt.

19. Beschichtungszusammensetzung gemäß einem der Ansprüche 1 bis 18, wobei das Lösungsmittel Wasser umfasst.

20. Beschichtungszusammensetzung gemäß einem der Ansprüche 1 bis 19, wobei die Beschichtung ein Silikatemulsionsanstrichmittel ist.

21. Verfahren zur Bereitstellung einer Reinigungs- und/oder Schmutzbeseitigungsbeschichtung auf einem Substrat, umfassend die Schritte:
a) Aufbringen einer Beschichtungszusammensetzung gemäß einem der Ansprüche 1 bis 20 auf eine Substratoberfläche, um eine Beschichtung zu bilden, und
b) Fixieren der Beschichtung, um eine anorganische Schicht auf der Oberfläche des Substrats zu erhalten.

22. Verfahren zur Verhinderung und/oder Behandlung von Moder, Schimmel, Algen und/oder Bakterien auf einem Substrat, umfassend die Schritte:
a) Aufbringen einer Beschichtungszusammensetzung gemäß einem der Ansprüche 1 bis 20 auf eine Substratoberfläche, um eine Beschichtung zu bilden, und
b) Fixieren der Beschichtung, um eine anorganische Schicht auf der Oberfläche des Substrats zu erhalten,

## Revendications

1. Composition de revêtement pour la formation d'une couche inorganique sur la surface du substrat, comprenant
- une quantité efficace de particules de dioxyde de titane photocatalytique,
- un agent opacifiant, choisi parmi les pigments, les colorants et/ou les charges, étant entendu que lorsque lesdits pigments sont des pigments de dioxyde de titane, ils ne sont pas photoactifs,
- des particules d'un liant inorganique,
- un liant organique,
- un solvant,
dans laquelle lesdits liant organique et particules de dioxyde de titane photocatalytique sont présents en un rapport pondéral dioxyde de titane photocatalytique/liant organique allant de 0,1 à 6 ; et dans laquelle le liant inorganique comprend une ou plusieurs substances amorphes choisies dans le groupe constitué par les silicates alcalins, les aluminates alcalins, les zirconates alcalins, les borates alcalins, les phosphates alcalins, les phosphonates alcalins et leurs mélanges.

2. Composition de revêtement selon la revendication 1, dans laquelle le liant organique est choisi dans le groupe des copolymères styrène/butadiène et des polymères et copolymères d'esters acryliques.

3. Composition de revêtement selon la revendication 1 ou 2, dans laquelle le liant organique est choisi dans le groupe constitué par un constituant polyvinylacrylique et les copolymères de styrène/esters (méth)acryliques.

4. Composition de revêtement selon l'une quelconque des revendications 1 à 3, dans laquelle le liant organique est présent en un rapport pondéral de particules de TiO₂ photocatalytique/liant organique allant de 0,3 à 4,5.

5. Composition de revêtement selon l'une quelconque des revendications 1 à 3, dans laquelle le liant organique est présent en un rapport pondéral de particules de TiO₂ photocatalytique/liant organique allant de 0,5 à 3,6.

6. Composition de revêtement selon l'une quelconque des revendications 1 à 5, dans laquelle les particules de dioxyde de titane photocatalytique sont l'anatase, le rutile ou des mélanges de ceux-ci.

7. Composition de revêtement selon l'une quelconque des revendications 1 à 6, dans laquelle les particules de dioxyde de titane photocatalytique comprennent un dioxyde de titane cristallin de type anatase.

8. Composition de revêtement selon la revendication 7, dans laquelle les particules de dioxyde de titane cristallin présentent une taille moyenne entre 5 et 80 nm.

9. Composition de revêtement selon la revendication 7, dans laquelle les particules de dioxyde de titane cristallin présentent une taille moyenne entre 5 et 50 nm.

10. Composition de revêtement selon la revendication 7, dans laquelle les particules de dioxyde de titane cristallin présentent une taille moyenne entre 10 et 40 nm.

11. Composition de revêtement selon l'une quelconque des revendications 1 à 10, dans laquelle les particules de dioxyde de titane photocatalytique sont présentes en une quantité allant de 0,5 à 20 % en poids de la composition totale.

12. Composition de revêtement selon l'une quelconque des revendications 1 à 10, dans laquelle les particules de dioxyde de titane photocatalytique sont présentes en une quantité allant de 1 à 15 % en poids de la composition totale.

13. Composition de revêtement selon l'une quelconque des revendications 1 à 10, dans laquelle les particules de dioxyde de titane photocatalytique sont présentes en une quantité allant de 3 à 12 % en poids de la composition totale.

14. Composition de revêtement selon l'une quelconque des revendications 1 à 13, dans laquelle le liant inorganique comprend au moins un silicate de métal alcalin.

15. Composition de revêtement selon la revendication 14, dans laquelle le silicate de métal alcalin est le silicate de potassium, le silicate de sodium ou le silicate de lithium.

16. Composition de revêtement selon la revendication 14 ou 15, dans laquelle la concentration du silicate de métal alcalin est de 0,5 % à 35 % en poids sur une base solide.

17. Composition de revêtement selon la revendication 14 ou 15, dans laquelle la concentration du silicate de métal alcalin est de 1 % à 30 % en poids sur une base solide.

18. Composition de revêtement selon la revendication 14 ou 15, dans laquelle la concentration du silicate de métal alcalin est de 2 % à 25 % en poids sur une base solide.

19. Composition de revêtement selon l'une quelconque des revendications 1 à 18, dans laquelle le solvant comprend de l'eau.

20. Composition de revêtement selon l'une quelconque des revendications 1 à 19, dans laquelle le revêtement est une peinture en émulsion à base de silicate.

21. Procédé pour fournir un revêtement dépolluant et/ou anti-salissant sur un substrat, comprenant les étapes consistant à :
a) appliquer une composition de revêtement selon l'une quelconque des revendications 1 à 20 sur une surface du substrat pour former un revêtement, et
b) fixer le revêtement pour obtenir une couche inorganique sur la surface du substrat.

22. Procédé pour prévenir et/ou traiter une moisissure, un moisi, des algues et/ou des bactéries sur un substrat, comprenant les étapes consistant à :
a) appliquer une composition de revêtement selon l'une quelconque des revendications 1 à 20 sur une surface du substrat pour former un revêtement, et
b) fixer le revêtement pour obtenir une couche inorganique sur la surface du substrat.
